# EUROPEAN PATENT SPECIFICATION

(11) **EP 2 609 260 B1**
(45) Date of publication and mention of the grant of the patent: **25.06.2014**
(21) Application number: 11754468.4
(22) Date of filing: 26.08.2011
(51) Int. Cl.: E04D 12/00

(54) **ROOFING MATERIAL HAVING GUIDE LINES**
DACHDECKMATERIAL
MATÉRIAU DE TOITURE

(30) Priority: 27.08.2010 GB 201014322
(43) Date of publication of application: 03.07.2013
(73) Proprietor: O'Brien, Thomas, London N12 8DS (GB)
(72) Inventor: O'Brien, Thomas, London N12 8DS (GB)
(74) Representative: Brown, Alexander Edward
(86) International application number: PCT/GB2011/051615
(87) International publication number: WO 2012/025764

(56) References cited:
- DE-U1- 20 209 021
- DE-U1-202007 008 309
- GB-A- 2 472 048
- US-A- 3 541 745
- US-A- 4 779 346
- US-A- 5 842 280
- US-A- 5 924 213
- US-A- 6 049 987

## Description

The present invention relates to a roofing material and, in particular, to a roofing felt material having guide lines pre-marked thereon.

In a conventional procedure for tiling a roof, an insulating felt material is laid across the rafters and battens are laid on the felt material in spaced horizontal rows and are secured to the rafters through the felt material. Subsequently, roof tiles are hung from the battens in overlapping rows. In order to ensure the correct spacing of the battens with respect to the dimensions of the tiles to be hung therefrom, the roofer will lay the roof felt material across the rafters, measure the intended batten positions and mark the measured positions on the felt material. This is a time-consuming process and can also lead to inaccurate batten positioning if an error is made in the measuring process.

It is known to provide a roofing felt material which has a plurality of pre-marked horizontal lines thereon across the width of the felt material. However, this known roofing material suffers the drawback that it is not universally usable with different dimensions of roofing tiles which are commercially available, as the lines are not configured appropriately for use with all variations of roof tile dimensions and also, identification of correct pre-marked line for each course of tiles can be difficult.

Building and construction materials are also known that comprise sheets with pre-printed groups of markings thereon to enable accurate cutting of the material. Such materials are known from DE 20 2007 008309, US 5,842,280, US 6,049,987 and US 5,924,213.

It is an object of the present invention to provide a roofing material which substantially alleviates or overcomes one or more of the problems mentioned above. Accordingly, the present invention provides a roofing material comprising a sheet of flexible material having two parallel long sides and two short end edges joining the long sides, the material having pre-printed thereon a plurality of longitudinal guide lines extending parallel to the long sides of the material, the guide lines being equally spaced and arranged in a repeating sequence across the width of the material to form identical groups of a plurality of guide lines, each guide line of a group being visually distinct from the other in the group, the material further including a plurality of different indicator markings, one indictor marking corresponding to each group of guide lines to enable each group of guide lines to be distinguished from the other groups.

Each guide line of each group is preferably a different colour to the other guide lines of the group, and each guide line is preferably 2.5mm wide. Furthermore, each guide line is preferably spaced from the adjacent guide line by 2.5mm.

Each group of guide lines preferably comprises five guide lines.

An edge of each guide line is preferably spaced from the corresponding edge of the adjacent guide line by 5mm.

The sequence of guide lines preferably repeats every 25mm across the width of the material.

The indicator markings identifying each group of guide lines are preferably provided at regular intervals along the length of the material.

The guide lines and/or the indicator markings may be formed of a water-proof ink and/or may be formed of an anti-reflective ink.

The guide lines may be formed intermittently along the length of the roll of material and the material may include blank spaces in between the intermittent guidelines.

The present invention also provides a method of tiling a roof comprising a series of parallel inclined rafters, the method comprising laying a roofing felt material according to any of claims 1 - 8 across the rafters with the long side perpendicular to the rafters, measuring the intended position of a first row of battens along the roofing felt material, noting the guide line group indicator marking and specific guide line within the group corresponding to the intended first batten row position and securing a row of battens along the selected guide line to hang a row of roof tiles therefrom.

A preferred embodiment of the present invention will now be described, by way of example only, with reference to the accompanying drawings, in which:
Figure 1 shows a plan view of a partially un-rolled roll of roofing felt material according to the present invention;
Figure 2 shows a side view of a section of a roof with the felt material of Figure 1 thereon.

Referring now to the drawings, a roll of roofing felt material 1 of the invention is shown, comprising a roll 2 of material having long side edges 3, 4 and a short end edge 5.

The surface of the material 1 is pre-marked, for example by printing, with a series of regularly spaced guide lines 6 extending along the length of the material and oriented parallel to the long side edges 3, 4.

The guide lines 6 are equally spaced from each other and are arranged in a repeating sequence across the width of the material from one long side 3 to the other long side 4, to form identical groups of guide lines 6, wherein each guide line in each group is visually distinct from the other guide lines in the group. For example, each guide line in each group may be of a different colour to the other guide lines in the group. Alternatively, the guide lines in each group may include different intermittent breaks, for example, the first line could be solid, the second dotted, the third dashed, the fourth alternating dots and dashes, etc.

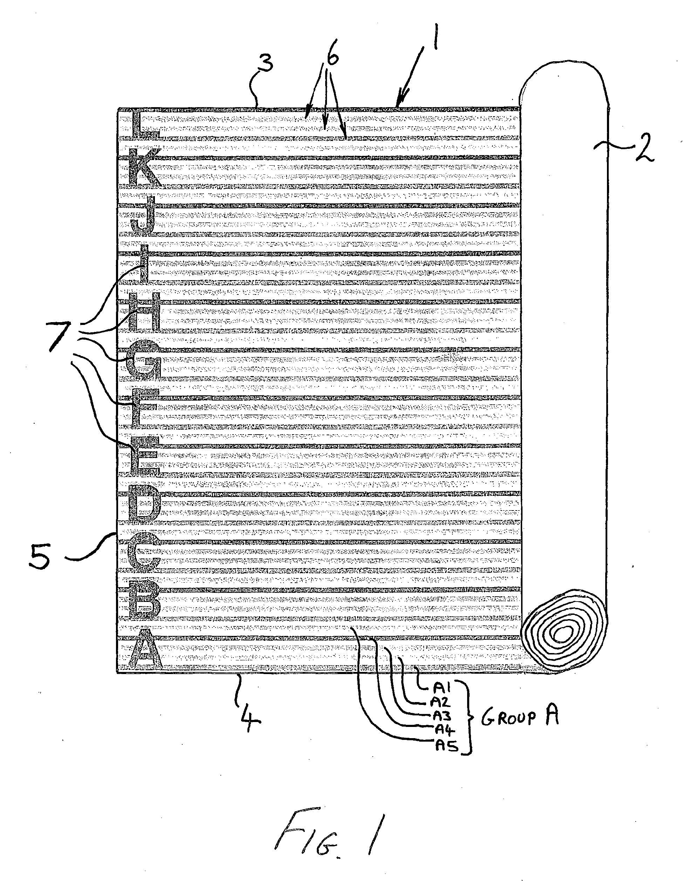

As the guide lines are arranged in a repeating sequence, the resulting groups of guide lines are identical. The material 1 further includes a series of indicator markings 7, each indicator marking corresponding to one group of guide lines to enable each group to be readily identified and distinguished from the other groups. Such indicator markings are shown in the exemplary embodiment as comprising alphabetical indicators A - L, although any other suitable markings may be used, such as numerical identifiers, Roman numerals, etc. Also, although only groups A - L are shown in the embodiment of Figure 1, a wider roll of roofing material may include more groups than that shown, which may, for example, be indicated as groups A - Z, or repeating series of groups A - Z. Also, although the group indicator markings 7 are only shown at one end of the roll in Figure 1, these group indicator markings may be repeated intermittently along the length of the roll 2, for example, at regular 2-metre spacings.

The preferred embodiment of the invention shown in Figure 1 comprises a repeating sequence of five lines per group, each line of a different colour to the others. Referring to group 'A' of the guide lines, the group comprises a first line, A1 in red, a second line A2 in green, a third line A3 in yellow, a fourth line A4 in black and a fifth line A5 in blue. Each guide line is spaced from the adjacent lines by an equal distance.

Virtually all modern roof tiles currently available are of a length dimension divisible by a factor 5mm units, the length dimension being the top edge of the tile to the bottom edge of the tile when viewed in the intended orientation in place on a roof. These include regular roof tiles of 250mm and 300mm, and smaller roof tiles, known as 'plain' tiles, of 100mm length, which are used in conjunction with specific 'eave' tiles of 150mm length. Tiles still available in imperial units are also almost all of a length divisible by 5mm units, and so are usable with the roofing felt material of the present invention.

Each of the guide lines 6 is 2.5mm wide, and each is spaced from the adjacent guide line 6 by a distance of 2.5mm. Therefore, with this line width and spacing, the repeating sequence of guide lines of each group repeats every 25mm across the width of the material 1, and the lower edge of each guide line 6 is spaced from the lower edge of the adjacent guide line 6 by 5mm.

It will be appreciated that, in use, the configuration of the roofing material 1 of the invention allows a roofer to identify any horizontal position across the width of the material to the nearest 5mm spacing, distinct from any other position on the material, by referring to the group indicator and colour, for example, 'A - blue', 'D - red' etc.

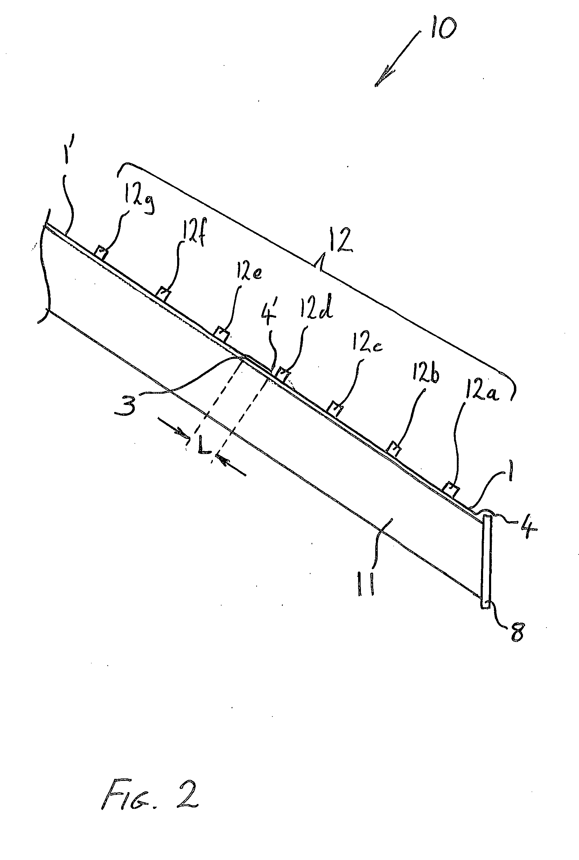

Use of the roofing material of the invention in a roofing process will now be described with reference to Figures 1 and 2. Firstly, the roofer rolls out the material 1 from a roll 2 across rafters 11 of a roof 10 to be tiled, with one long edge 4 of the material 1 overlapping a faceboard 8 at the bottom end of the rafters 11, the length of material 1 being arranged parallel to the faceboard 8.

The roofer then measures up from the faceboard 8 the required distance for hanging the lowermost line of roof tiles (not shown). If the roof is being tiled with the smaller plain tiles, this lowermost line of tiles would be specific eave tiles (not shown). The roofer notes the group indicator 7 and specific guide line 6 within that group corresponding to the required batten 12 position for the first row of tiles, and secures a first batten 12a to the rafters 11 along the selected guide line 6. If more than one roofer is working on the job, such as in the case of a particularly long building roof being tiled, the first roofer can simply convey the specific group and line indicator information to the other roofers further along the roof who can secure further battens 12a at the same position on the rafters 11 corresponding to the same guide line for the first line of eave tiles to be hung from. This avoids the need for repeated measurement and the inherent risk of errors and mis-positioning of the battens. Also, whatever particular type of tile is being used, there will be an appropriate guide line 6 in exactly the correct position to use as the reference line.

The roofer then measures up from the first batten 12a the required distance for the next row of tiles to be hung. Once the roofer has measured the appropriate distance for the next batten 12b to be placed, he notes the specific group indicator 7 and guide line 6 within that group for that specific batten location and secures the second row of battens 12b to the rafters 11 along that line. Again, if further roofers are working on the roof, this line identifying information is simply conveyed to them to ensure accurate and fool-proof positioning of the next row of battens 12b on the rafters 11.

The above process is repeated until the upper edge 3 of the roofing material is neared. Another layer of roofing felt material 1' is then laid across the rafters 11 further up the roof (see Figure 2), with a sufficient overlap L as required. Again, the overlap L can be measured a certain distance from the top edge 3 of the material 1, and the group indicator 7 and guide line identifier for the guide line 6 corresponding to where the lower edge 4' of the next layer of roofing material 1' will be positioned can be noted, to ensure consistent and accurate positioning of the next layer of roofing material 1' on the rafters 11.

The above process is repeated until all required battens 12 are secured to the rafters 11 so that the tiles can be hung therefrom, and the use of the particular arrangement of pre-marked guide lines on the roofing felt material of the invention described above ensures that the batten positioning is accurate and consistent, and easily achieved with minimal risk of error. Furthermore, the roofing felt material 1 of the invention is universally useable with every different roof tile size currently available because the guide line 6 spacing is equal and consistent across the width of the roofing felt material 1 and the material is not just marked with guide lines spaced according to only one particular tile dimension, as per conventional pre-marked roofing felt material. Furthermore, every individual line 6 across the entire width of the roll 2 of material 1 can be easily and quickly identified independently of every other line 6, by reference to the group indicator marking 7 and the specific line format of the line 6 within that group, for example "C-red" or "F-yellow", etc.

The roofing felt material 1 of the invention can also be used in a modified roofing process to that described above in which, after the first batten 12a is secured to the rafters as described above, only every third batten 12 is secured to the rafters 11 up to the top of the roof (not shown). The same process described above would be followed to determine the specific position of the battens 12 and laying of each additional layer of roofing felt material overlapping the previous layer, but instead of measuring one tile length up for the next batten to be located, the roofer would measure three tile lengths up, note the group indicator 7 and specific guide line 6 within that group, secure the line of battens along the specific guide line 6 and repeat the process every three tile lengths. Once the roofer has reached the top of the roof, he would then work from the top of the roof down, securing the required two lines of battens between each line of battens 12 initially secured to the rafters 11 along the appropriate guide line 6. This allows the roofer to work up the roof with plenty of footing space between battens, and then work back down the roof laying remaining battens 12 while still allowing space for his feet between the battens 12 until the bottom edge of the roof is reached. This is particularly advantageous when working with smaller 'plain' tiles as in such a roofing operation, the batten spacing is smaller than most adults' foot length which can make working on the roof difficult. It will be appreciated that this method may be altered by laying every other batten or every fourth batten instead of every third batten. In all methods, the calculation of batten spacing and noting of the group indicator 7 and specific guide line identifier of the roofing felt material 1 of the invention for each batten row position, ensures consistent and accurate positioning of the rows of battens 12 on the rafters 11, regardless of the particular tile dimensions being used.

One problem with known roofing materials which need to be marked each time a new baton is to be placed thereon, is that if the roof is being laid in wet weather, the markings can run or smudge, and become unclear, especially if, as is traditional, chalk is used to make the markings. Accordingly, the indicator lines of the present invention are preferably of a water-proof, non-run ink. Furthermore, in bright weather, the ink used in known marked roofing felt materials may reflect the sun and produce excessive glare to the roofers. Accordingly, the indicator lines of the present invention are preferably of an anti-reflective and/or non-glare ink to reduce the reflected light back from the felt material to the roofers' eyes. In order to further limit this problem, it is intended within the scope of the invention that the markings described above may not be provided continuously along the length of the roll 2 of roofing felt material 1, but instead, may be provided intermittently, with blank sections of roofing felt material in between the marked sections.

It is also to be noted that one advantage of the specific embodiment described above, in which the sequence of guide lines 6 repeats every 25mm, is that almost all roofing tiles commercially available are of a length which is a factor of 25mm, such as 100mm, 150mm, 200mm, 250mm, etc. Therefore, the particular arrangement of guide lines 6 of the invention means that once a first batten row 12a is secured to the rafters 11, each subsequent row of battens will coincide with the same corresponding guide line within a later group, for example, all will be aligned along the red guide lines of the particular groups, e.g. D-red, J-red, P-red... etc.

It will be appreciated that although the embodiments of the present invention described above are described in terms of roof tiles, the invention is equally applicable to use in securing roof slates.

It will be appreciated that the embodiments of the present invention described above are exemplary only and variations are intended within the scope of the invention, defined by the claims hereafter.

## Claims

1. A roofing material (1) comprising a sheet having two parallel long sides (3, 4) and two short end edges (5) joining the long sides, the material having pre-printed thereon a plurality of longitudinal guide lines (6) extending parallel to the long sides (3,4) of the material (1), the guide lines (6) being equally spaced and arranged in a repeating sequence across the width of the material to form identical groups of a plurality of guide lines, the material further including a plurality of difference indicator markings (A-L), one indicator marking corresponding to each group of guide lines to enable each group of guide lines (6) to be distinguished from the other groups **characterised in that** said sheet is of flexible material and that, each guide line of a group is visually distinct from the other in the group.

2. A roofing material according to claim 1 wherein each guide line (6) of each group is a different colour to the other guide lines of the group.

3. A roofing material according to claim 1 or claim 2 wherein each guide line (6) is 2.5mm wide.

4. A roofing material according to any of claims 1 - 3 wherein each guide line (6) is spaced from the adjacent guide line by 2.5mm.

5. A roofing material according to any preceding claim wherein each group of guide lines (6) comprises five guide lines.

6. A roofing material according to any preceding claim wherein an edge of each guide line (6) is spaced from the corresponding edge of the adjacent guide line by 5mm.

7. A roofing material according to any preceding claim wherein the sequence of guide lines repeats every 25mm across the width of the material.

8. A roofing material according to any preceding claim wherein the indicator markings (A-L) identifying each group of guide lines (6) are provided at regular intervals along the length of the material.

9. A roofing material according to any preceding claim wherein the guide lines (6) and/or the indicator markings (A-L) are formed of a water-proof ink.

10. A roofing material according to any preceding claim wherein the guide lines (6) and/or the indicator markings (A-L) are formed of an anti-reflective ink.

11. A roofing material according to any preceding claim wherein the guide lines (6) are formed intermittently along the length of the roll of material and the material includes blank spaces in between the intermittent guidelines.

12. A method of tiling a roof comprising a series of parallel inclined rafters, the method comprising laying a roofing felt material (1) according to any of claims 1 - 8 across the rafters (11)with the long side perpendicular to the rafters, measuring the intended position of a first row of battens (12) along the roofing felt material, noting the guide line group indicator marking (A-L) and specific guide line (6) within the group corresponding to the intended first batten row position and securing a row of battens along the selected guide line to hang a row of roof tiles therefrom.

## Patentansprüche

1. Dachdeckmaterial (1), umfassend eine Bahn mit zwei parallelen langen Seiten (3, 4) und zwei kurzen Endrändern (5), welche die langen Seiten miteinander verbinden, wobei das Material eine auf es vorgedruckte Vielzahl von Längsführungslinien (6) hat, die parallel zu den langen Seiten (3, 4) des Materials (1) verlaufen, wobei die Führungslinien (6) gleich voneinander beabstandet und in einer sich wiederholenden Folge über die Breite des Materials angeordnet sind, um identische Gruppen einer Vielzahl von Führungslinien zu bilden, wobei das Material ferner eine Vielzahl von Differenzanzeigemarkierungen (A-L) beinhaltet, wobei je eine Anzeigemarkierung jeder Gruppe von Führungslinien entspricht, damit jede Gruppe von Führungslinien (6) von den anderen Gruppen unterschieden werden kann, **dadurch gekennzeichnet, dass** die genannte Bahn aus flexiblem Material ist und dass jede Führungslinie einer Gruppe sich optisch von der anderen in der Gruppe unterscheidet.

2. Dachdeckmaterial nach Anspruch 1, wobei jede Führungslinie (6) jeder Gruppe eine andere Farbe als die anderen Führungslinien der Gruppe hat.

3. Dachdeckmaterial nach Anspruch 1 oder Anspruch 2, wobei jede Führungslinie (6) 2,5 mm breit ist.

4. Dachdeckmaterial nach einem der Ansprüche 1 bis 3, wobei jede Führungslinie (6) um 2,5 mm von der benachbarten Führungslinie beabstandet ist.

5. Dachdeckmaterial nach einem der vorhergehenden Ansprüche, wobei jede Gruppe von Führungslinien (6) fünf Führungslinien umfasst.

6. Dachdeckmaterial nach einem der vorhergehenden Ansprüche, wobei ein Rand jeder Führungslinie (6) um 5 mm vom entsprechenden Rand der benachbarten Führungslinie beabstandet ist.

7. Dachdeckmaterial nach einem der vorhergehenden Ansprüche, wobei die Führungslinienfolge alle 25 mm über die Breite des Materials wiederholt wird.

8. Dachdeckmaterial nach einem der vorhergehenden Ansprüche, wobei die Anzeigemarkierungen (A-L), die jede Gruppe von Führungslinien (6) kennzeichnen, in regelmäßigen Intervallen entlang der Länge des Materials bereitgestellt sind.

9. Dachdeckmaterial nach einem der vorhergehenden Ansprüche, wobei die Führungslinien (6) und/oder die Anzeigemarkierungen (A-L) aus einer wasserfesten Farbe hergestellt sind.

10. Dachdeckmaterial nach einem der vorhergehenden Ansprüche, wobei die Führungslinien (6) und/oder die Anzeigemarkierungen (A-L) aus einer Antireflexfarbe hergestellt sind.

11. Dachdeckmaterial nach einem der vorhergehenden Ansprüche, wobei die Führungslinien (6) entlang der Länge der Materialrolle unterbrochen ausgebildet sind und das Material Leerräume zwischen den unterbrochenen Führungslinien beinhaltet.

12. Verfahren zum Eindecken eines Dachs, das eine Reihe von parallelen geneigten Sparren aufweist, wobei das Verfahren Folgendes aufweist: Verlegen eines Dachpappematerials (1) gemäß einem der Ansprüche 1 bis 8 über die Sparren (11), mit der langen Seite lotrecht zu den Sparren, Messen der vorgesehenen Position einer ersten Reihe von Latten (12) am Dachpappematerial entlang, Beachten der Anzeigemarkierung der Führungsliniengruppe (A-L) und der spezifischen Führungslinie (6) innerhalb der Gruppe, die der vorgesehenen Position der ersten Lattenreihe entspricht, und Befestigen einer Reihe von Latten entlang der gewählten Führungslinie, um eine Reihe von Dachziegeln an ihr aufzuhängen.

## Revendications

1. Matériau de toiture (1) comprenant une feuille avec deux côtés longs parallèles (3, 4) et deux bords d'extrémité courts (5) lesquels joignent les côtés longs, le matériau présentant sur sa surface, en pré-impression, une pluralité de lignes de guidage longitudinales (6) qui s'étendent parallèlement aux côtés longs (3, 4) du matériau (1), les lignes de guidage (6) étant uniformément espacées et agencées suivant une séquence répétitive en travers de la largeur du matériau afin de former des groupes identiques d'une pluralité de lignes de guidage, le matériau comprenant en outre une pluralité de marquages d'indication de différence (A-L), un marquage d'indication correspondant à chaque groupe de lignes de guidage pour permettre de distinguer chaque groupe de lignes de guidage (6) par rapport aux autres groupes, **caractérisé en ce que** ladite feuille est en matériau souple et que chaque ligne de guidage d'un groupe est visuellement distincte de l'autre au sein du groupe.

2. Matériau de toiture selon la revendication 1, chaque ligne de guidage (6) de chaque groupe ayant une couleur qui est différente des autres lignes de guidage du groupe.

3. Matériau de toiture selon la revendication 1 ou la revendication 2, chaque ligne de guidage (6) ayant une largeur de 2,5 mm.

4. Matériau de toiture selon l'une quelconque des revendications 1 à 3, chaque ligne de guidage (6) étant espacée de 2,5mm par rapport à la ligne de guidage adjacente.

5. Matériau de toiture selon l'une quelconque des revendications précédentes, chaque groupe de lignes de guidage (6) comprenant cinq lignes de guidage.

6. Matériau de toiture selon l'une quelconque des revendications précédentes, un bord de chaque ligne de guidage (6) étant espacée de 5 mm par rapport au bord correspondant de la ligne de guidage adjacente.

7. Matériau de toiture selon l'une quelconque des revendications précédentes, la séquence de lignes de guidage se répétant tous les 25 mm en travers de la largeur du matériau.

8. Matériau de toiture selon l'une quelconque des revendications précédentes, les marquages d'indication (A-L) identifiant chaque groupe de lignes de guidage (6) étant prévus suivant des intervalles réguliers le long de la longueur du matériau.

9. Matériau de toiture selon l'une quelconque des revendications précédentes, les lignes de guidage (6) et/ou les marquages d'indication (A-L) étant formés en une encre résistante à l'eau.

10. Matériau de toiture selon l'une quelconque des revendications précédentes, les lignes de guidage (6) et/ou les marquages d'indication (A-L) étant formés en une encre anti-reflets.

11. Matériau de toiture selon l'une quelconque des revendications précédentes, les lignes de guidage (6) étant formées de façon intermittente le long de la longueur du rouleau de matériau, et le matériau incluant des espaces vierges dans l'intervalle entre les lignes de guidage intermittentes.

12. Procédé servant à couvrir un toit avec des tuiles comprenant une série de chevrons inclinés suivant un plan parallèle, le procédé comprenant les opérations consistant à poser un matériau en feutre pour toitures (1) selon l'une quelconque des revendications 1 à 8 en travers des chevrons (11) alors que le côté long est perpendiculaire aux chevrons, à mesurer la position prévue d'une première rangée de voliges (12) le long du matériau en feutre pour toitures, à noter les marquages d'indication (A-L) du groupe de lignes de guidage et une ligne de guidage spécifique (6) à l'intérieur du groupe correspondant à la première position prévue de rangée de voliges et à assujettir une rangée de voliges le long de la ligne de guidage sélectionnée pour accrocher à celles-ci une rangée de tuiles de toit.
